(19) Europäisches Patentamt
European Patent Office
Office européen des brevets

(11) **EP 2 278 425 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(51) Int Cl.:
***G05B 19/404*** (2006.01)   ***G05B 19/416*** (2006.01)

(21) Anmeldenummer: **08016516.0**

(22) Anmeldetag: **19.09.2008**

(54) **Verfahren und Vorrichtung zur Steuerung eines Bewegungsablaufs eines Maschinenelements**

Method and device for controlling a movement cycle of a machine element

Procédé et dispositif de commande d'un processus de mouvement d'un élément de machine

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.11.2007 DE 102007053216**

(43) Veröffentlichungstag der Anmeldung:
**26.01.2011 Patentblatt 2011/04**

(60) Teilanmeldung:
**12006531.3 / 2 557 465**

(73) Patentinhaber: **Robert Bosch GmbH**
**70469 Stuttgart (DE)**

(72) Erfinder:
• **Krauskopf, Sebastian**
  **97737 Gemünden (DE)**
• **Korajda, Bartosz**
  **97816 Lohr (DE)**

(74) Vertreter: **Thürer, Andreas**
**Bosch Rexroth AG**
**Intellectual Property**
**Zum Eisengiesser 1**
**97816 Lohr am Main (DE)**

(56) Entgegenhaltungen:
EP-A- 1 220 069      EP-A1- 1 956 453
DE-A1- 10 027 864   US-A- 4 663 726

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf ein Verfahren zur Steuerung eines Bewegungsablaufs eines Maschinenelements. Vielen industriellen Zweigen beispielsweise der Verpackungsindustrie oder der Textilindustrie werden Herstellungsmaschinen verwendet, die oftmals eine Vielzahl von beweglichen Maschinenelementen aufweisen, deren Bewegung aufeinander präzise abgestimmt ist. Dabei ist es bei modernen Anlagen üblich, die Bewegungsabläufe dieser einzelnen Maschinenabläufe mittels Prozessoren oder Steuerungseinrichtungen zu steuern wobei die einzunehmenden Bewegungsabläufe in diesen Steuerungseinrichtungen programmiert sind.

So können beispielsweise in einer Steuerungseinrichtung Positionswerte eines Leitelements bzw. einer Leitachse sowie diesen zugeordnete Positionsdaten für ein Folgeelement bzw. eine Folgeachse abgelegt sein.

Das erfindungsgemäße Verfahren kann beispielsweise in Verpackungsmaschinen, Druckmaschinen, Textilmaschinen und Automatisierungsanlagen benutzt werden. Weiterhin wäre es auch möglich, das Verfahren bei elektrisch, hydraulisch und pneumatisch gesteuerten Anlagen einzusetzen. Die vorliegende Erfindung kann jedoch darüber hinaus auch bei anderen Anlagen Einsatz finden, bei denen die Bewegung mehrerer Maschinenelemente aufeinander abzustimmen ist. Oftmals sind bei dieser Abstimmung insbesondere auch Randbedingungen in demjenigen Abschnitt zu berücksichtigen, in dem die Bewegung durchgeführt wird, d.h. es sind insbesondere eine Anfangs- und eine Endgeschwindigkeit, eine Anfangsposition und eine Endposition sowie eine Anfangs- und eine Endbeschleunigung zu berücksichtigen. Um die Bewegungsabläufe genau zu steuern werden dabei im Stand der Technik üblicherweise funktionale Zusammenhänge in Form von Polynomen höherer Ordnung eingesetzt. Mit Hilfe dieser Polynome wird eine Leitachsposition in eine Beziehung zu der zugeordneten Folgeachsposition gesetzt.

Durch die Verwendung dieser Polynome, beispielsweise Polynome fünften Grades, lässt sich der Zusammenhang insbesondere unter Berücksichtigung der oben genannten Randbedingungen erstellen. Allerdings können Fälle auftreten, insbesondere bei ungünstigen normierten Geschwindigkeitsrandwerten, bei denen das Polynom "überschwingt", also beispielsweise vorübergehend die Position des zu steuernden Maschinenelements ins Negative gleitet bzw. eine rückwärtige Bewegung auftritt. Derartige rückwärtige Bewegungen sind in vielen Bereichen beispielsweise der Druckindustrie fatal und nicht akzeptabel.

Aus der US 200610167570 A1 ist ein Verfahren zur schnellen Kontrolle einer Prozessvariable ohne Überschwingen bekannt, wobei hierzu eine Polynomfunktion unter Berücksichtigung eines Feedbacks verwendet wird. Damit wird in dieser Druckschrift ein Regler offenbart, wobei zur Steuerung stets die Daten eines entsprechenden Sensors verwendet werden müssen.

Der vorliegenden Erfindung liegt daher die Aufgabe zugrunde, eine Steuerung eines Maschinenelements zu bewirken, bei dem in effizienter Weise ein Überschwingen bzw. die Annahme negativer Werte des Bewegungsablaufs verhindert wird. Mit anderen Worten soll erreicht werden, dass ein Überschwingen des Polynoms höherer Ordnung auch bei ungünstigen normierten Geschwindigkeitsrandwerten verhindert wird. Wie gesagt, ist in vielen Anwendungen dieses Verhalten unerwünscht, beispielsweise wenn Verfahrgrenzen eingehalten werden müssen oder der mechanische Aufbau die resultierende Bewegung nicht zulässt.

Dies wird erfindungsgemäß durch ein Verfahren nach Anspruch 1 erreicht. Vorteilhafte Ausführungsformen und Weiterbildungen sind Gegenstand der Unteransprüche.

Bei dem erfindungsgemäßen Verfahren zur Steuerung eines Bewegungsablaufs eines Maschinenelements erfolgt die Steuerung des Bewegungsablaufs des Maschinenelements unter Zugrundelegung eines funktionalen Zusammenhangs zwischen einer Leitachse und einer Folgeachse und der funktionale Zusammenhang wird unter Berücksichtigung mehrerer Randbedingungen dieses Bewegungsablaufs ermittelt. Erfindungsgemäß weist der funktionale Zusammenhang wenigstens einen ersten Abschnitt auf, der von einen Polynom n-ter Ordnung gebildet ist, wenigstens einen zweiten Abschnitt, der wenigstens teilweise von dem ersten Abschnitt getrennt ist und der von einem Polynom a-ter Ordnung gebildet ist, wobei a kleiner als n ist.

Bei dem Maschinenelement kann es sich um einen beliebigen beweglichen Körper handeln, wie beispielsweise eine drehbare Welle, ein Hubelement oder generell ein eine lineare Bewegung durchführendes Element.

Damit wird erfindungsgemäß der funktionale Zusammenhang zur Beschreibung des Bewegungsablaufs abschnittsweise definiert wobei zur Definition Polynome unterschiedlicher Ordnung verwendet werden. Durch die Verwendung des Polynoms a-ter Ordnung für den zweiten Abschnitt kann insbesondere derjenige Bereich kompensiert werden, der ansonsten überschwingen würde. Durch diese abschnittsweise Definition kann der gesamte Bewegungsablauf ohne Überschwingungen ausgebildet sein. Bevorzugt sind der erste Abschnitt und der zweite Abschnitt vollständig getrennt voneinander.

Bei dem erfindungsgemäßen Verfahren werden Werte für Randbedingungen des Bewegungsablaufs ermittelt, diese Werte miteinander verglichen und in Reaktion auf ein Ergebnis dieses Vergleichs die Abfolge zwischen den Abschnitten festgelegt.

Bei einer weiteren vorteilhaften Ausgestaltung wird zunächst ein Polynom n-ter Ordnung ermittelt, welches den funktionalen Zusammenhang beschreibt und anschließend eine Umkehrfunktion dieses Polynoms n-ter Ordnung verwendet um den funktionalen Zusammenhang zu beschreiben.

Bevorzugt werden für die Ermittlung des Polynoms n-ter Ordnung wenigstens einige der Randwerte bzw. Randbedingungen modifiziert und insbesondere invertiert. Besonders bevorzugt werden die Randwerte für die normierten Geschwindigkeiten d.h. mathematisch gesehen für die Steigungen invertiert. Durch dieses Invertieren kann erreicht werden, dass zunächst bei der Ermittlung des Polynoms die inversen Randwerte zugrunde gelegt werden. Wenn anschließend die Umkehrfunktion gebildet wird, stimmen deren Randwerte wieder mit den ursprünglichen Geschwindigkeitswerten überein.

Diese zweite Gestaltung eignet sich insbesondere in dem Fall, in dem hohe Anfangs- und hohe Endgeschwindigkeiten des zu steuernden Maschinenelements vorliegen. Durch die Umkehrfunktion kann einerseits noch den Randwerten genüge geleistet werden und andererseits kann ein zu starkes Überschwingen verhindert werden. Dies wird genau unter Bezugnahme auf die Figuren erläutert.

Grundsätzlich wäre es auch möglich, die beiden Abschnitte abschnittsweise zu überlagern und beispielsweise durch unterschiedliche Gewichtung entsprechend zu betonen. Vorzugsweise sind jedoch, wie oben gesagt, die beiden Abschnitte vollständig voneinander getrennt. Es wird darauf hingewiesen, dass es auch möglich wäre, lediglich einen Abschnitt zu bestimmen und in unterschiedlichen Bereichen dieses Abschnitts das Polynom n-ter Ordnung und das Polynom a-ter Ordnung unterschiedlich zu gewichten.

Bei dem bevorzugten Verfahren ist der funktionale Zusammenhang in dem ersten Abschnitt durch ein Polynom n-ter Ordnung gebildet, wobei n größer oder gleich 5 ist. Damit wird zumindest ein Polynom fünfter oder höherer Ordnung verwendet und besonders bevorzugt ein Polynom fünfter Ordnung. Polynome fünfter Ordnung eignen sich in besonderer Weise zur Beschreibung derartiger Bewegungsabläufe, da sie einerseits eine hohe Ruckfreiheit gewährleisten und andererseits auch mehrere Randbedingungen, beispielsweise sechs Randbedingungen verarbeiten können.

Bei einem weiteren bevorzugten Verfahren weisen eine normierte Anfangsgeschwindigkeit und eine normierte Endgeschwindigkeit des Maschinenelements gleiche mathematische Vorzeichen auf.

Für Kombinationen, in denen die normierte Anfangsgeschwindigkeit und eine normierte Endgeschwindigkeit unterschiedliche Vorzeichen aufweisen ist das hier vorgestellte Bewegungsgesetz nicht immer geeignet. In diesem Falle würde die Bewegungsbahn in einem Randpunkt einen Knick aufweisen, wenn man verlangen würde, dass sie einen vorgegebenen normierten Bereich nicht verlassen dürfte.

Vorzugsweise wird der zweite Abschnitt durch einen geradlinigen Verlauf, d. h. ein Polynom nullter oder erster Ordnung gebildet. Genauer gesagt wird bei diesem bevorzugten Verfahren vor oder hinter dem Polynom höherer Ordnung ein Geradenstück eingefügt.

Bei einem weiteren bevorzugten Verfahren wird der funktionale Zusammenhang zu dem gesamten Bewegungsablauf genau einem ersten Abschnitt und genau einem zweiten Abschnitt gebildet. Dies bedeutet, dass das oben erwähnte Geradenstück mit dem Polynom gemeinsam den gesamten Bewegungsablauf abbildet. Es wäre jedoch auch möglich, mehr als zwei Abschnitte vorzusehen, beispielsweise zwei Polynome und ein dazwischen liegendes Geradenstück.

Bei dem erfindungsgemäßen Verfahren werden Werte für Randbedingungen des Bewegungsablaufs ermittelt, diese Werte miteinander verglichen und in Reaktion auf ein Ergebnis dieses Vergleichs die Abfolge zwischen den Abschnitten festgelegt.

So ist es beispielsweise möglich, die Anfangs- und die Endgeschwindigkeit zu ermitteln und eine Fallunterscheidung durchzuführen und als Folge dieser Fallunterscheidung auszuwählen, ob ein Geradenstück vor oder hinter dem Polynom verwendet oder eine Umkehrfunktion gebildet wird.

Bei einem weiteren bevorzugten Verfahren sind diese Randbedingungen Geschwindigkeiten des Maschinenelements am Anfang und am Ende des betreffenden Abschnitts. Es wäre jedoch auch möglich als Randbedingungen Beschleunigungen des Maschinenelements zu verwenden.

Bei einem weiteren bevorzugten Verfahren wird in Abhängigkeit dieser Randbedingungen ein Übergangspunkt festgelegt, in dem die Abschnitte ineinander übergehen. Falls beispielsweise ein Geradenstück vor einen Polynom eingesetzt wird, wird von einem bestimmten Punkt ab ein Übergang von dem geradlinigen Abschnitt in das Polynom stattfinden. Dieser Übergangspunkt wird wiederum aus den jeweiligen Randbedingungen ermittelt.

Eine hier nicht beanspruchte Vorrichtung zur Steuerung eines Bewegungsablaufs eines Maschinenelements weist eine Prozesseinrichtung auf, welche die Steuerung des Bewegungsablaufs des Maschinenelements unter Zugrundelegung eines funktionalen Zusammenhangs zwischen einer Leitachse und einer Folgeachse steuert, wobei die Prozessoreinrichtung den funktionalen Zusammenhang unter Berücksichtigung mehrerer Randbedingungen dieses Bewegungsablaufs ermittelt. Hiernach weist dieser funktionale Zusammenhang wenigstens einen ersten Abschnitt der von einem Polynom n-ter Ordnung gebildet ist und wenigstens einen zweiten Abschnitt, der wenigstens abschnittsweise von dem ersten Abschnitt getrennt ist auf, wobei der zweite Abschnitt von einem Polynom a-ter Ordnung gebildet ist und wobei a kleiner als n ist.

Bei einer weiteren hier nicht beanspruchten Vorrichtung ist die Prozessoreinrichtung derart gestaltet, dass sie zunächst wenigstens einige der Randwerte ändert, anschließend unter Zugrundelegung der geänderten Randwerte eine Polynomfunktion ermittelt und schließlich für diese Polymnomfunktion eine Umkehrfunktion bildet. Vorzugsweise invertiert dabei die Prozessoreinrichtung die besagten Randwerte. Es wird jedoch darauf hingewiesen, dass auch mehrere Prozessoreinrichtungen vorgesehen sein können, in denen einzelne Schritte bei der Erzeugung des funktionalen Zusammenhangs ablaufen.

Damit wird auch bei der genannten, hier nicht beanspruchten Steuerung der Bewegungsablauf durch eine Abfolge zweier Abschnitte gebildet, wobei diese Abschnitte sich aus Polynome unterschiedlicher Ordnung zusammensetzen.

Weitere Vorteile und Ausführungsformen ergeben sich aus den beigefügten Zeichnungen.

Darin zeigen;

Fig. 1    eine schematische Darstellung einer erfindungsgemäßen Steuerung;

Fig. 2    ein Polynom zur Steuerung nach dem Stand der Technik;

Fig. 3    einen funktionalen Zusammenhang für eine weitere Gruppe an Randbedingungen;

Fig. 4    einen Verlauf einer erfindungsgemäß abschnittsweise definierten Funktion;

Fig. 5    einen erfindungsgemäß abschnittsweise definierten Verlauf für andere Randbedingungen; und

Fig. 6    eine weitere Korrekturmöglichkeit für weitere Randbedingungen.

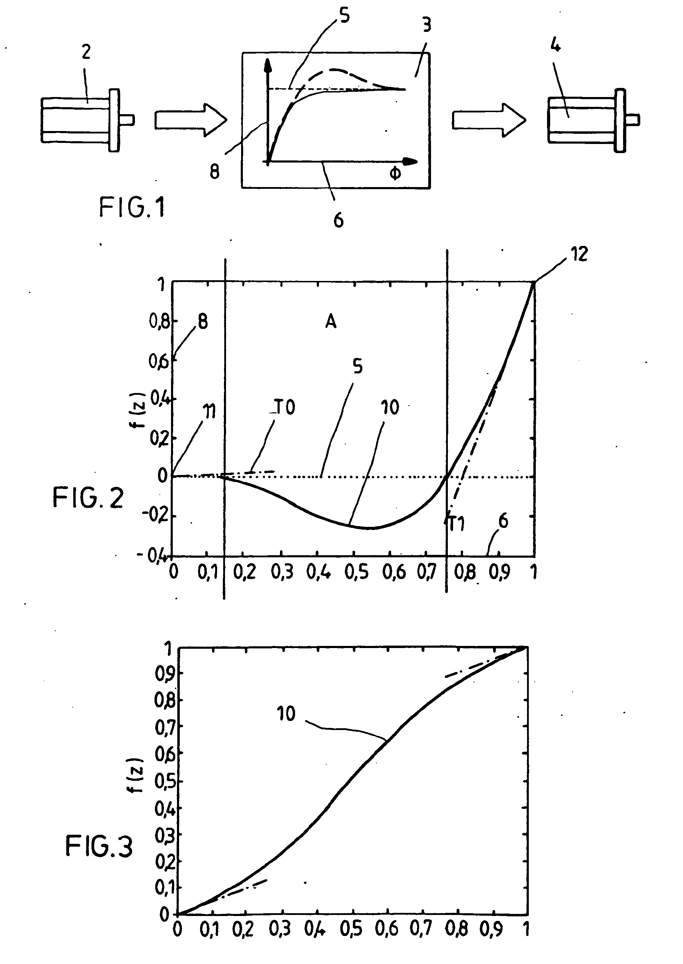

Figur 1 zeigt eine Darstellung für ein erfindungsgemäßes Verfahren. Dabei ist eine Leitachse 2 gezeigt sowie eine Folgeachse 4. Die Bewegung dieser Folgeachse 4 wird unter Zugrundelegung von Ortsdaten der Leitachse 2 mittels eines grafisch dargestellten funktionalen Zusammenhangs 3 auf die Bewegung der Folgeachse 4 abgebildet. Dabei ist auf der x-Achse 6 der Winkel bzw. die Lage der Leitachse dargestellt und auf der y-Achse 8 die entsprechende Position der Folgeachse. Die gestrichelte horizontale Linie zeigt einen Grenzwert, der während der Bewegung nicht überschritten werden sollte. Man erkennt, dass die gestrichelte Linie nach dem Stand der Technik bezüglich dieser horizontalen Linie 5 überschwingt, während die durchgezogene Linie kein entsprechendes Überschwingen aufweist.

Figur 2 zeigt eine Darstellung einer Funktion nach dem Stand der Technik. Dabei ist in Figur 2 der Fall dargestellt, bei dem die Ausgangsgeschwindigkeit niedrig ist beispielsweise die normierte Geschwindigkeit $v_0$ 0,1 beträgt und die Endgeschwindigkeit $v_1$ hoch ist bzw. hier die Endgeschwindigkeit $v_1$ bei 5 liegt. Da in der grafischen Darstellung von Figur 2 jeweils Orts- bzw. Winkelwerte gegeneinander aufgetragen sind, ergibt sich die jeweilige Geschwindigkeit $v_0$ bzw. $v_1$ aus den Steigungen der Grafik bzw. der Tangenten T0 und T1.

Zur Ermittlung des funktionalen Zusammenhangs werden als Bedingungen die jeweiligen Randwerte für den Ort, die Geschwindigkeit und die Beschleunigung an den Randpunkten 11 und 12 berücksichtigt und entsprechend ein Polynom fünfter Ordnung gebildet, welches dann wie in Figur 1 ausfällt. In Figur 2 ist zu erkennen, dass das Polynom aufgrund der hohen normierten Endgeschwindigkeit $v_1$ negativ überschwingt. Die gestrichelte Linie 5 zeigt auch hier die Grenzen des normierten Bereichs. Eine hohe normierte Endgeschwindigkeit ergibt sich nicht nur für eine hohe Endgeschwindigkeit des Bewegungsschritts sondern auch wenn der Leitachsabschnitt des Schritts groß im Verhältnis zu dem Hub-, d. h. zu dem Folgeachsabschnitt gewählt ist. Das Bezugszeichen T0 bezieht sich auf die Steigung in den Punkt 11 und das Bezugszeichen T1 auf die Steigung bzw. die Geschwindigkeit in dem Punkt 12.

Durch das erfindungsgemäße Verfahren bzw. das hier gezeigte Bewegungsgesetz soll dieses mögliche Überschwingen erkannt werden und durch Modifikation der Bewegungsbahn 10 verändert werden. Wie diese Veränderung vorgenommen wird, hängt dabei von der Kombination der normierten Geschwindigkeitsrandwerte ab. Dabei wird bei einem bevorzugten Verfahren in vier unterschiedliche Fälle unterschieden, wobei alle Fälle die Gemeinsamkeit haben, dass sowohl die normierte Anfangsgeschwindigkeit $v_0$ als auch die normierte Endgeschwindigkeit $v_1$ das gleiche Vorzeichen haben. Wie oben erwähnt kann dieses Bewegungsgesetz nicht verwendet werden, wenn die normierte Anfangsgeschwindigkeit und die normierte Endgeschwindigkeit $v_1$ unterschiedliche Vorzeichen haben. Dies würde bedeuten, dass die Bewegungsbahn in einem Randpunkt einen Knick hätte, wenn sie den normierten Bereich zwischen $0 \leq x \leq 1$ und gleichzeitig $0 \leq f(x) \leq 1$ nicht verlassen dürfte.

In einem ersten Fall der oben erwähnten Fallunterscheidung ist sowohl die normierte Geschwindigkeit $v_0$ als auch die normierte Geschwindigkeit $v_1 \leq 1$. Bei diesen Randwertskombinationen kann davon ausgegangen werden, dass das Polynom nicht überschwingt, daher kann das Polynom hier über bekannte Formeln berechnet werden. Figur 3 zeigt ein Beispiel eines solchen unkritischen Profilverlaufs 10.

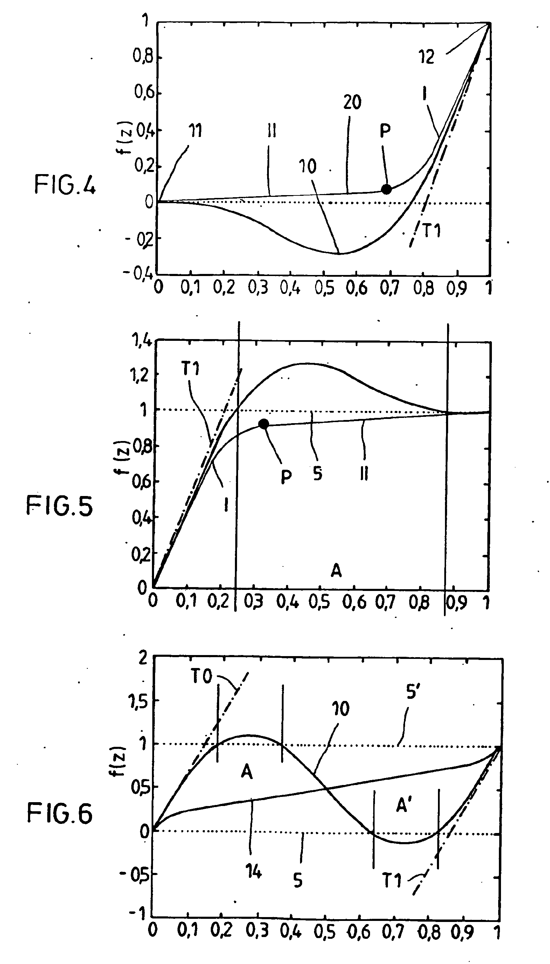

Ein weiterer Fall ist in Figur 4 gezeigt. Hier ist die Anfangsgeschwindigkeit $v_0 \leq 1$ und die Endgeschwindigkeit $v_1 > 1$, mit anderen Worten hier liegt eine hohe Endgeschwindigkeit und eine geringe Anfangsgeschwindigkeit vor. In diesem Fall kann es, wie es in Figur 2 gezeigt, grundsätzlich zu einem Überschwingen kommen. Dies wird jedoch verhindert, in dem ein Geradenstück II vor dem Polynom I eingefügt wird. Die Steigung dieses Geradenstücks entspricht dabei bevorzugt der normierten Geschwindigkeit $v_0$. Auf diese Weise werden die normierten Randwerten des damit verkleinerten Polynoms I so angepasst, dass sich kein Wendepunkt ergibt und damit tritt auch kein Überschwingen in den negativen Bereich auf, wie in Figur 4 gezeigt. Das Bezugszeichen 20 kennzeichnet die aus den Abschnitten I und II zusammengesetzte Bewegungsfunktion.

Auch bei der in Figur 4 gezeigten Darstellung beträgt die Anfangsgeschwindigkeit $v_0 = 0{,}1$ und die Endgeschwindigkeit $v_1 = 5$. Der Grenzpunkt P zwischen den beiden Abschnitte I und II bzw. die Koordinaten x1 und y1 dieses Grenzpunkts P werden durch den nachfolgenden Zusammenhänge errechnet.

$$v_x = \left( \frac{1}{5} \left( v_0(2 + k) + v_1(3 - k) \right) \right) \qquad (1)$$

$$x_1 = 1 - \frac{1 - v_0}{v_x - v_0} \qquad (2)$$

$$y_1 = 1 - (1 - x_1) \cdot v_x \qquad (3)$$

Dabei bezeichnet $0 \leq k \leq 1$ den Formfaktor. $v_x$ ist die mittlere Steigung, die sich auf einer Geraden zwischen den beiden Punkten 11 und 12 ergeben würde. Die Werte x1 und y1 geben die Koordinaten des Punkts P an, in dem die Abschnitte ineinander übergehen. Man erkennt, dass bei den errechneten Verläufen mit den beiden Abschnitten I und II kein Überschwingen auftritt, wo hingegen der Verlauf nach dem Stand der Technik ein deutliches Überschwingen aufweist.

Figur 5 zeigt eine entsprechende Anpassung für den dritten Fall, in dem eine hohe Anfangsgeschwindigkeit und eine niedrige Endgeschwindigkeit vorliegt, d. h. $v_0 > 1$ ist und $V1 \leq 1$. Auch in diesem Fall wird ein Geradenstück II verwendet, wobei jedoch hier dieses Geradenstück nicht vor sondern hinter dem Polynom I eingefügt wird. Auch hier lässt sich der Grenzpunkt P zwischen den beiden Abschnitten I und II nach folgenden Gleichungen berechnen:

$$v_x = \left( \frac{1}{5} \left( v_0(2 + k) + v_1(3 - k) \right) \right) \qquad (4)$$

$$x_1 = \frac{1 - v_1}{v_x - v_1} \qquad (5)$$

$$y_1 = x_1 \cdot v_x \qquad (6)$$

Man erkennt, dass die beiden unteren Gleichungen (5) und (6) die inversen Gleichungen bezüglich den beiden angegebenen Gleichungen (2) und (3) sind, d. h. hier wurden lediglich die Abschnitte I und II in ihrer Abfolge ausgetauscht.

In Figur 5 ist wiederum der resultierende Verlauf gezeigt, der kein Überschwingen aufweist, wohingegen nach dem Stand der Technik resultierende Verlauf ein deutliches Überschwingen in den Bereich A aufweist.

In Figur 6 ist ein weiterer Fall dargestellt. In diesem Fall sind sowohl die Anfangsgeschwindigkeit, veranschaulicht durch die Tangente T0 als auch die Endgeschwindigkeit veranschaulicht durch die Tangente T1 größer als 1. In diesem Falle wird das Polynom fünfter Ordnung 10 zu einer Schwingbewegung führen und dabei wird es in zwei Bereichen A und A' - die Toleranzgrenzen 5 und 5- überschreiten.

Eine Möglichkeit, dem entgegenzuwirken, bestünde darin, hier das Polynom in drei Abschnitten zu definieren, wobei ein gerader Abschnitt zwischen zwei Polynomabschnitten gewählt wird.

Bei der in Figur 6 veranschaulichten Methode wird die Bewegungsbahn auf den im ersten Fall (vgl. Figur 3) beschriebenen Verlauf des Polynoms abgebildet. Genauer gesagt wird dieses in Figur 1 gezeigte Polynom an der Hauptdiagonalen des wieder normierten Koordinatensystems gespiegelt und entsprechend werden die Geschwindigkeitsrandwerte übertragen. Mathematisch gesehen wird damit eine Umkehrfunktion dieses Polynoms gebildet.

Die normierte Geschwindigkeit der Umkehrfunktion beträgt

$$v_0' = 1/v_0 \tag{7}$$

und die normierte Geschwindigkeit

$$v_1' = 1/v_1 \tag{8}$$

Damit ergeben sich die gespiegelten normierten Geschwindigkeitswerte $v_0'$ und $v_1'$ als die Kehrwerte der normierten Geschwindigkeitsrandwerte. Diese normierten Geschwindigkeitsrandwerte werden damit wieder auf den überschwingungsfreien Bereich $0 \leq v \leq 1$, der in Figur 6 durch das Bezugszeichen 14 veranschaulicht ist, abgebildet. Damit errechnet sich der Verlauf der Bewegungsbahn aus der Umkehrfunktion des allgemeinen Polynoms fünfter Ordnung. Eine Berechnung dieser Umkehrfunktion wird bevorzugt über numerische Methoden durchgeführt. So lässt sie beispielsweise mit Hilfe des Newton-Verfahrens der gesuchte Wert mit x bzw. y als erster Schätzwert nach nur wenigen Iterationen bis auf 15 Nachkommastellen bestimmen, d. h. ausreichend für die erforderliche Maschinengenauigkeit. In Figur 6 ist dieser Verlauf, wie gesagt, durch das Bezugszeichen 12 gekennzeichnet.

Die beiden Geschwindigkeiten $v_0$ und $v_1$ betragen hier jeweils 7.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

| | |
|---|---|
| 2 | Leitachse |
| 3 | funktionaler Zusammenhang |
| 4 | Folgeachse |
| 5 | Grenze des normierten Bereichs |
| 6 | Leitachse (Koordinatenachse) |
| 8 | Folgeachse (Koordinatenachse) |
| 10 | Bewegungsbahn (Stand der Technik) |
| 11 | Anfangspunkt |
| 12 | Endpunkt |
| 14 | überschwingungsfreier Bereich |
| 20 | modifizierte Bewegungsbahn |
| T0 | Tangente im Anfangspunkt 11 |
| T1 | Tangente im Endpunkt 12 |
| P | Grenzpunkt |
| $v_0$ | Anfangsgeschwindigkeit |
| $v_1$ | Endgeschwindigkeit |
| A. A' | Bereich eines Überschwingens |

**Patentansprüche**

**1.** Verfahren zur Steuerung eines Bewegungsablaufs eines Maschinenelements, wobei die Steuerung des Bewegungsablaufs des Maschinenelements unter Zugrundelegung eines funktionalen Zusammenhangs (3,20) zwischen einer Leitachse (2) und einer Folgeachse (4) erfolgt und der funktionale Zusammenhang unter Berücksichtigung mehrerer Randbedingungen dieses Bewegungsablaufs ermittelt wird, wobei der funktionale Zusammenhang (3, 20) wenigstens einen ersten Abschnitt (I), der von einem Polynom n-ter Ordnung gebildet ist und wenigstens einen zweiten Abschnitt (II), der wenigstens teilweise von dem ersten Abschnitt getrennt ist, und der von einem Polynom a-ter Ordnung gebildet ist, aufweist, wobei a kleiner als n ist, **dadurch gekennzeichnet, dass.** Werte für Randbedingungen des Bewegungsablaufs ermittelt werden, diese Werte miteinander verglichen werden und in Reaktion auf ein Ergebnis dieses Vergleichs die Abfolge zwischen den Abschnitten festgelegt wird.

**2.** Verfahren nach Anspruch 1, **dadurch gekennzeichnet, dass** der funktionale Zusammenhang in dem ersten Abschnitt (I) von einem Polynom n-ter Ordnung gebildet wird, wobei n größer oder gleich 5 ist.

**3.** Verfahren nach wenigstens einem der vorangegangenen Ansprüche 1 oder 2, **dadurch gekennzeichnet, dass** eine normierte Anfangsgeschwindigkeit $v_0$ und eine normierte Endgeschwindigkeit $v_1$ des Maschinenelements das gleiche mathematische Vorzeichen aufweisen.

**4.** Verfahren nach wenigstens einem der vorangegangenen Ansprüche, **dadurch gekennzeichnet, dass** der zweite Abschnitt (II) durch einen geradlinigen Verlauf gebildet wird.

**5.** Verfahren nach wenigstens einem der vorangegangenen Ansprüche, **dadurch gekennzeichnet, dass** der funktionale Zusammenhang für den gesamten Bewegungsablauf von genau einem ersten Abschnitt (I) und genau einem zweiten Abschnitt (II) gebildet wird.

**6.** Verfahren nach Anspruch 5, **dadurch gekennzeichnet, dass** die Randbedingungen Geschwindigkeiten ($v_0$, $v_1$) des Maschinenelements sind.

**7.** Verfahren nach wenigstens einem der vorangegangenen Ansprüche 2 - 3 **dadurch gekennzeichnet, dass** in Abhängigkeit von den Werten der Randbedingungen ein Übergangspunkt (P) festgelegt wird, in dem die Abschnitte (I,II) ineinander übergehen.

**Claims**

**1.** Method for controlling a movement cycle of a machine element, the control of the movement cycle of the machine element being performed on the basis of a functional relationship (3, 20) between a leading axis (2) and a following axis (4), and the functional relationship being determined by taking account of a plurality of boundary conditions of said movement cycle, the functional relationship (3, 20) having at least a first section (I), which is formed by a polynomial of nth order, and at least a second section (II), which is separated at least partially from the first section and is formed by a polynomial of ath order, a being smaller than n, **characterized in that** values are determined for boundary conditions of the movement cycle, said values being compared with one another, and the sequence between the sections is established in reaction to a result of said comparison.

**2.** Method according to Claim 1, **characterized in that** the functional relationship in the first section (I) is formed by a polynomial of nth order, n being greater than or equal to 5.

3. Method according to at least one of the preceding Claims 1 and 2, **characterized in that** a normalized initial speed $v_0$ and a normalized end speed $v_1$ of the machine element have the same algebraic sign.

4. Method according to at least one of the preceding claims, **characterized in that** the second section (II) is formed by a rectilinear curve.

5. Method according to at least one of the preceding claims, **characterized in that** the functional relationship is formed for the entire movement cycle of exactly one first section (I) and exactly one second section (II).

6. Method according to Claim 5, **characterized in that** the boundary conditions are speeds ($v_0$, $v_1$) of the machine element.

7. Method according to at least one of the preceding Claims 2-3, **characterized in that** a transition point (P) at which the sections (I, II) merge into one another is established as a function of the values of the boundary conditions.

**Revendications**

1. Procédé de commande du déroulement du déplacement d'un élément de machine, la commande du déroulement du déplacement de l'élément de machine étant effectuée sur la base d'une association fonctionnelle (3, 20) entre un axe de guidage (2) et un axe suiveur (4) et l'association fonctionnelle étant déterminée en tenant compte de plusieurs conditions du déroulement de ce déplacement, l'association fonctionnelle (3, 20) présentant au moins une première partie (I) formée d'un polynôme d'ordre n et au moins une deuxième partie (II) séparée au moins en partie de la première partie et formée d'un polynôme d'ordre a, a étant plus petit que n, **caractérisé en ce que** les valeurs des conditions du déroulement du déplacement sont déterminées, **en ce que** ces valeurs sont comparées les unes aux autres et **en ce que** la succession entre les parties est définie en réponse au résultat de cette comparaison.

2. Procédé selon la revendication 1, **caractérisé en ce que** l'association fonctionnelle de la première partie (I) est formée d'un polynôme d'ordre n, n étant supérieur ou égal à 5.

3. Procédé selon au moins l'une des revendications 1 ou 2 qui précèdent, **caractérisé en ce qu'**une vitesse initiale $v_0$ normalisée et une vitesse finale $v_1$ normalisée de l'élément de machine présentent le même signe arithmétique.

4. Procédé selon au moins l'une des revendications précédentes, **caractérisé en ce que** la deuxième partie (II) est formée d'une ligne droite.

5. Procédé selon au moins l'une des revendications précédentes, **caractérisé en ce que** l'association fonctionnelle de l'ensemble du déroulement du déplacement est formée exactement d'une première partie (I) et exactement d'une deuxième partie (II).

6. Procédé selon la revendication 5, **caractérisé en ce que** les conditions sont les vitesses ($v_0$, $v_1$) de l'élément de machine.

7. Procédé selon au moins l'une des revendications 2 et 3 qui précèdent, **caractérisé en ce qu'**un point de transition (P) auquel les parties (I, II) se raccordent l'une à l'autre est défini en fonction des valeurs des conditions.

FIG.1

FIG.2

FIG.3

FIG.4

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 200610167570 A1